# EUROPEAN PATENT SPECIFICATION

(11) **EP 1 040 627 B1**
(45) Date of publication and mention of the grant of the patent: **22.08.2007**
(21) Application number: 98966606.0
(22) Date of filing: 02.12.1998
(51) Int. Cl.: H04L 25/03

(54) **GROUP DELAY EQUALIZER**
GRUPPENLAUFZEITENTZERRER
EGALISEUR DE TEMPS DE PROPAGATION DE GROUPE

(30) Priority: 19.12.1997 IT MI972824
(43) Date of publication of application: 04.10.2000
(73) Proprietor: Nokia Siemens Networks S.p.A., 20060 Milano (IT)
(72) Inventor: BIANCHI, Sergio, I-27100 Pavia (IT); SCHMIDMAIER, Richard, D-81359 München (DE)
(74) Representative: Giustini, Delio
(86) International application number: PCT/EP1998/007801
(87) International publication number: WO 1999/033234

(56) References cited:
- EP-A- 0 524 560
- EP-A- 0 786 887
- WO-A-97/36409
- US-A- 4 524 422
- ZINA BEN-MILED ET AL: "On the design of inphase and quadrature filters for delay compensation" IEEE TRANSACTIONS ON SIGNAL PROCESSING, vol. 42, no. 9, September 1994, pages 2501-2503, XP002103088 ISSN 1053-587X, IEEE, USA
- PATENT ABSTRACTS OF JAPAN vol. 013, no. 106 (E-726), 14 March 1989 & JP 63 276910 A (OKI ELECTRIC IND CO LTD), 15 November 1988

## Description

### Field of the Invention

The present invention relates to a group delay equalizer, and in particular to a digital equalizer that can be used to compensate the group delay introduced by radiofrequency filters employed in high capacity radio links.

It is known that radiofrequency channel filters, known also under the name of branching filters, introduce a group delay distortion in digital radio links, degrading the signal transmitted. This degradation is particularly significant in high capacity radio links, where a high spectral effectiveness is required, that is a high ratio between the frequency of bits transmitted and the band occupied by the signal. However, just digital modulation systems are particularly sensitive to the group delay distortion, so they must be fit with an equalizer to compensate this distortion.

### Background art

Group delay analogue equalizers are known, operating both at radiofrequency, through the so-called self-equalized filters, and at intermediate frequency, through lumped parameter cells. However, these known equalizers show all the typical disadvantages of analogue circuits, that is high cost, complex manufacturing, as well as difficult calibration and suitability as the operational conditions change.

To overcome these drawbacks, group delay equalizers have been implemented according to the digital technology.

A first type of these digital equalizers includes a plurality of filters with finite impulse response, known as FIR (Finite Impulse Response), which are used to compensate in base band the group delay just before the modulation of the signal in radiofrequency. This kind of digital equalizer has the advantage to be comparatively simple, since the filters receive at input a word of a few bits. However, the signal at the power amplifier input is affected by a group delay distortion, caused by said previous compensation, which significantly worsens the ratio between the peak power and the average power of the signal. The amplifier shall therefore operate at a lower mean power, so that also the system gain of the radio link is necessarily worsened. An additional disadvantage of this type of digital equalizer is represented by the fact that it can compensate only group delay distortions on symmetric signals in the frequency range.

To overcome these last drawbacks it was conceived a second type of digital equalizer including a FIR used to compensate the group delay in the receipt phase of the radiofrequency signal. This equalizer, implemented through a long series of filtering cells arranged in cascade, is considerably more complex of the previous one and takes a comparatively long time to perform the whole equalization, so it can cause transit delays, detrimental to the whole receiver in which the same in inserted.

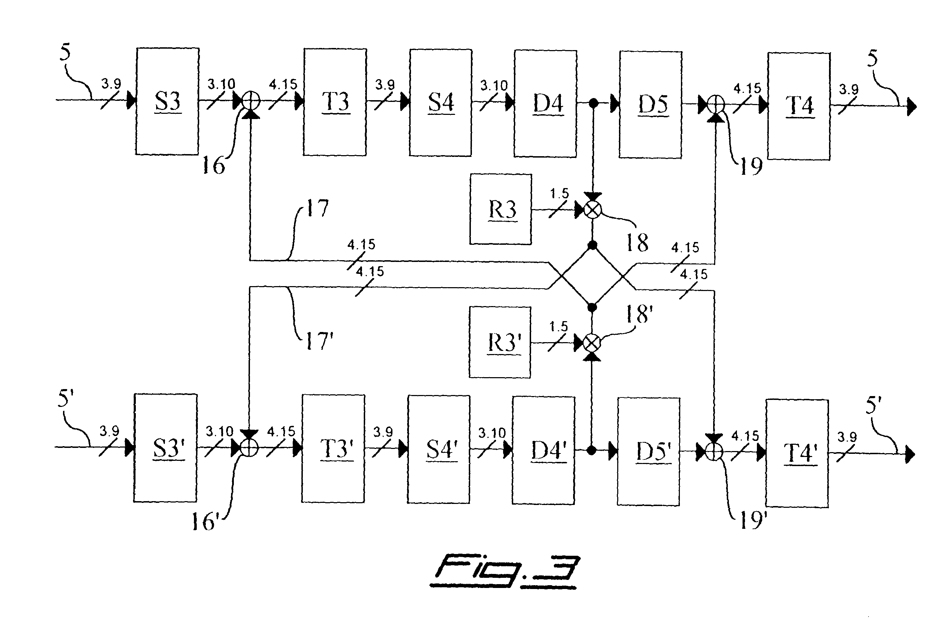

The European patent application EP-A2-0 524 560 discloses a method and apparatus for updating coefficients in a complex adaptive digital equalizer of the second type. Coefficient adaptation uses the LMS (Least Mean Squares) algorithm to reduce baseband intersymbol interference. The equalizer is constituted by a modular filtering section for both an in phase I and an in quadrature Q components at the output of a demodulator. Each filtering section including M stages of classical N-tap FIR filters and each stage (Fig.3) including four identically structured N-tap FIR filters. Each stage of four N-tap FIR filters is coupled to an its own block for updating the 4N coefficients of that stage; the M updating blocks are fed from an unique error signal generator block. Unequalized channel data are quantized and chained trough the cascade of the M updating blocks. Each of the four FIR filter has a unique input for data either real or imaginary, a unique output for the filtered data, and one input for p coefficients coming from its updating block. The four filters correspond to the four combinations of the two I, Q components of data with the two I, Q updated coefficients. Two two-input adders (66, 68) follow the last stage of N-tap FIR filters to proper combine two by two the four output signals and obtain the two I, Q components of equalized data. The effect of such combinations in the filtering process is that of trying to compensate cross talk between the I and Q channels due to channel distortion and receiver impairments.

For reducing the convergence time, M parallel processing paths are implemented to concurrently updating the N coefficients of each N-tap FIR filter.

Undoubtedly the cited digital equalizer of the second type speed up convergence, but its advantages are appreciated only if adaptation is required, otherwise the drawbacks of this second type of equalizers remains and are increased due to the long chain of FIR stages.

### Object of the Invention

Object of the present invention is that to obtain a complex digital equalizer not showing the drawbacks mentioned above, that is an equalizer not adaptive having a comparatively simpler structure able to combine signals on in phase and in quadrature filtering paths in order to improve equalization and compensate the group delay in an acceptable time.

### Summary of the Invention

Said object is attained through an equalizer whose main characteristics are specified in the first claim.

Through the particular circuital structure of the equalizer according to the present invention, only filtering cells having Infinite Impulse Response (IIR) are implemented. The simplified IIR filtering structure can be easily suited to the required utilization, showing a minimum quantization noise and ability to operate at high frequencies, in particular at the symbol frequency of high capacity radio links.

Leaving for the moment our invention out of consideration, it is known in the art that an IIR filter having an order N lower than a corresponding FIR is used to approximate a desired mask. The following fundamental text supplies a valid teaching in the field of digital filters: "DIGITAL PROCESSING OF SIGNALS - theory and practice", author Maurice Bellanger, published by JOHN WILEY & SONS Ltd., Copyright © 1984, translation of the volume of the same author titled: "Traitement Numérique du signal - Théorie Et Pratique". In section 7.10 of this book a comparison between IIR and FIR filters is made.

The mere replacement of FIR with IIR filters is an operation that is not completely appropriate in a digital equalizer of I/Q type. The reason is that it leaves the problem of improving equalization open. Furthermore there is not indication in the art of how performing such a substitution in this gender of equalizers, specially as concerns the various filtering combinations on I and Q data components. The digital equalizer of our invention solves this problem through the combination set by the three filtering sections recited in the claim 1 and in particular by the contrubute of the third filtering section.

A further advantage of the equalizer according to the present invention is offered by the particular internal structure of biquadratic filters. The structure of said filters is similar to the structure known in the technique under the name of "direct form II", from which it differs due to the fact to include three delay cells, instead of two. The addition of the third delay cell, though delaying the direct output of the filter, enables to reduce the quantity of calculations to be made in a single clock period of the processor forming the filter itself, with resultant advantages in the reliability and accuracy of the equalizer. With this type of structure it is also possible to implement a filter not necessarily of the all-pass type, but able to possibly modify also the response in amplitude of the signal to be equalized.

An additional advantage of the equalizer according to the present invention is offered by the particular implementation of fixed-point numeric signals. To avoid possible rounds-off that delay the processing, the present equalizer employs adding cells transforming the numbers at input by adding a logic one to the same on the right of the less significant bit. Although this measure requires that numbers are represented with an additional bit, its implementation in an electronic circuit involves a negligible increase in complexity, considering that said additional bit is a fixed one. However, numbers represented with this system have the advantage to be symmetrical versus the zero, since they have an equal number of positive and negative levels. The sign inversion operation is therefore simplified, for which it is sufficient to invert all the bits and maintain the one in the less significant position, also avoiding all the overflow risks deriving from the fact that in the representation in complement to two, there is no positive number corresponding to the negative number having the maximum module. This system of numeric representation retains the advantages of rounding off, but makes the implementation of a quick electronic circuit easier.

An additional advantage of the equalizer according to the present invention is given by the fact that no saturation is made inside it, but immediately before the output. This is enabled by the fact that two additional dynamic bits are used during the signal processing with simultaneous limitation of the input signal level according to the coefficients of the transfer function of the equalizer itself.

The features of the present invention which are believed to be novel are set forth in the appended claims.

### Brief description of the drawings

The invention, together with further objects and advantages thereof, may be understood with reference to the following description, taken in conjunction with the accompanying drawings, in which:
- figure 1 is a block diagram of a receiver including an equalizer according to the present invention;
- figure 2 is a block diagram of a biquadratic filtering cell of the equalizer of fig. 1; and
- figure 3 is a block diagram of the complex filtering cell of the equalizer of fig. 1.

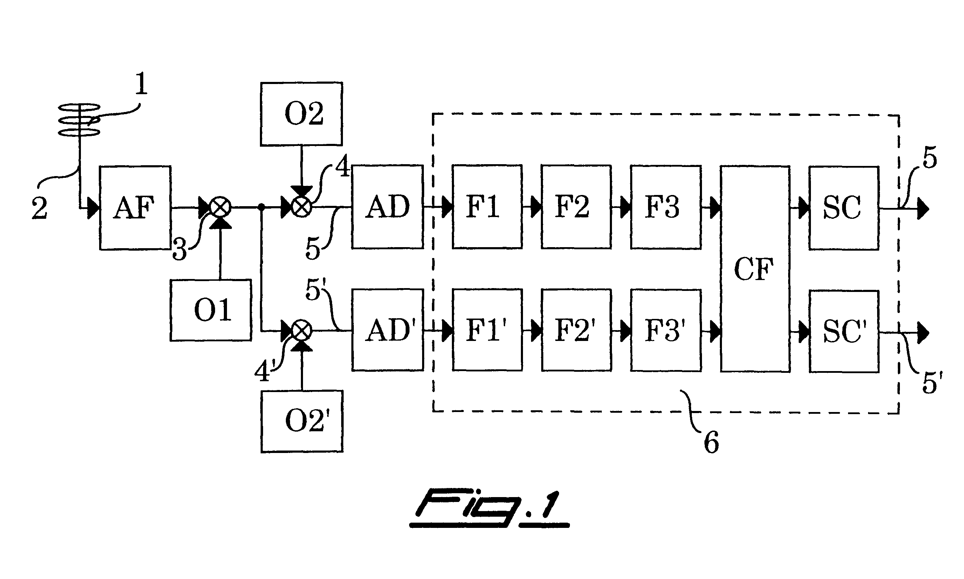

Making reference to figure 1, we see that in a receiver of radiofrequency signals, for instance 11 GHz, a signal is picked up in the known way through an antenna 1. The signal is filtered by at least a channel analogue filter AF limiting the band of the signal received filtering all undesired frequencies, for instance the frequency bands adjacent to the desired band, but introducing in the signal itself a group delay distortion, however minimum. The filtered signal is converted by a local oscillator O1 at intermediate frequency, for instance 70 MHz.

Said distorted signal (that is the signal picked up by antenna 1, following the effect of filter AF suffers a group delay distortion) is withdrawn by two multipliers 4 and 4' connected in parallel and demodulated in base band through oscillators 02 and 02'. The reference signal of oscillators 02 and 02' is 90° phase shifted, in order that also the signals in base band at the output of multipliers 4 and 4' are phase shifted by 90°. With this measure, two channels in quadrature are created in the known way, known also under the name of "I" channel and "Q" channel. The signals transmitted on these channels are converted to digital form by a pair of analogue-digital converters AD and AD' and sent to two transmission lines 5 and 5' belonging to the equalizer according to the present invention 6 (shown with a dotted line).

On each one of the transmission lines 5 and 5' one or more filtering cells are adequately connected in series, having a transfer function with at least two poles and two real or complex conjugate zeroes. In particular, in the present embodiment of the invention six biquadratic filtering cells F1, F1', F2, F2', F3 and F3' are present, connected in series, three for each transmission line, whose operation shall be described more in detail hereafter.

The output of the last filtering cells F3 and F3' placed on each transmission line 5 and 5' is connected at input to a complex filtering cell CF having a transfer function with an imaginary pole and a zero. Said complex filtering cell includes in the known way, two inputs and two outputs corresponding to the real part and to the imaginary part, respectively of the signal to be equalized.

The two outputs of the complex filtering cell CF are preferably connected to two saturation cells SC and SC' serving to adapt, in particular at 1.9 bit, the resolution of signals coming out from the equalizer through the lines 5 and 5' to the different devices (not shown in the figure) of the receiver.

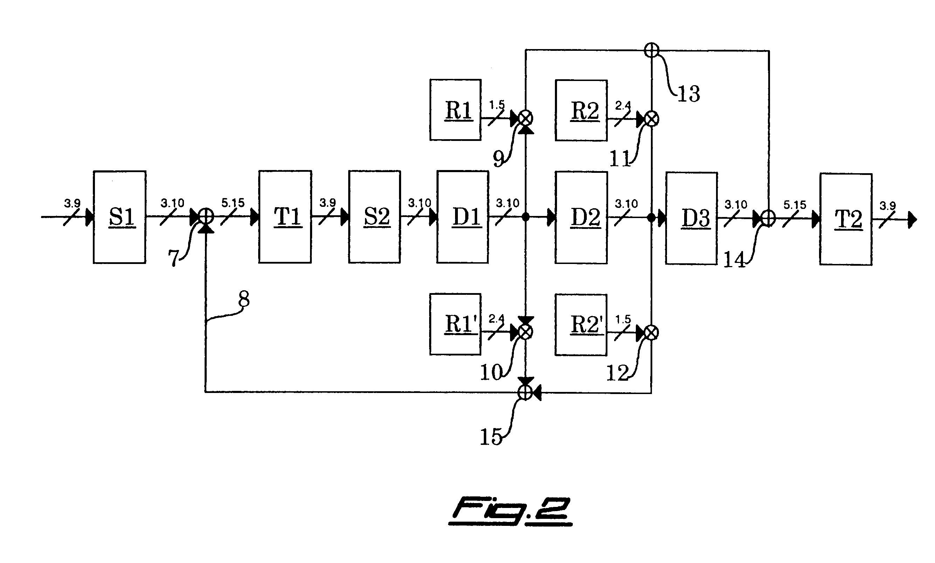

Making now reference to figure 2, we see that each one of the filtering cells F1, F1', F2, F2', F3 and F3' receives at input a digital signal from one of the two transmission lines 5 or 5', in particular at 12 bit. In the figure, the resolution of said signal through the different transmission lines is indicated with a notation in complement to two of the m.n type, where m indicates the number of Figures on the left of the point and n the number of Figures on the right of the point. The resolution is therefore equal to m + n bit, where the weight of the more significant bit is 2^{m-1}, while that of the less significant bit is 2⁻ⁿ. By extension, m and n values can also be negative, to indicate intervals of integer numbers only or decimal numbers only. For instance, a number having a 4.3 bit resolution includes all integer multiples of 0,125 included between 7,875 and -8.

The 3.9 bit number, that is 12 bits, received on the line at input is processed by a first adder cell S 1 which sums up said number to a logic one on the right of the less significant bit, in such a way that the number at output consists of 3.10 bits. This number is summed up by an adder 7 to another number transmitted through a retroactive line 8 to 5.15 bit. The output of this adder 7 is connected to a first cutting cell T1 truncating the sum which eliminates the less significant bits and the possible more significant bits in excess compared to the 3.9 bit resolution. The output of the cell T1 is connected in series to a second adding cell S2 transforming the 3.9 bit number at input into a 3.10 bit number at output adding a logic one on the right of the less significant bit, as it takes place in cell S1.

The cell S2 is connected in series to three delay cells D1, D2 and D3, each of them delaying the signal at Ts/2 input, where Ts/2 is the sampling period of the converters AD and AD'. The output of the first delay cell D1 is connected, in addition to the second delay cell D2, also to two multipliers 9 and 10 multiplying the number coming out from the delay cell D1 by two numbers drawn for instance from a pair of registers R1 and R1'. In particular, registers R1 and R1' contain a 1.5 and 2.4 bits number, respectively. Also the output of the second delay cell D2 is connected, in addition to the third delay cell D3, to two multipliers 11 and 12 multiplying the number coming out from the delay cell D2 by two numbers drawn for instance from a pair of registers R2 and R2'. In particular, registers R2 and R2' contain a 2.4 and 1.5-bit number, respectively.

The products coming out from multipliers 9 and 11 are summed up by an adder 13 and the result at output is summed by an additional adder 14 with the number coming out from the third delay cell D3. The 5.15 bit value coming out from the adder 14 is taken to the output of the filtering cell after truncation in a 3.9 bit number by an additional cutting cell T2. The products coming out from multipliers 10 and 12 are on the contrary added among them by an adder 15 and the result at output is transmitted through line 8 to the adder 7.

The whole of the delay cells D1, D2 and D3 connected among them and connected to two pairs of multipliers 9, 10, 11 and 12 through two lines, out of which a retroactive one, duly forms a biquadratic filter having a transfer function of the H(z) = (b₀+b₁z⁻¹+z⁻²)/(1+a₁z⁻¹+a₂z⁻²) type, where coefficients b₀, and b₁ correspond to the numbers at input of multipliers 9 and 11, respectively, in particular contained in registers R1 and R2, while coefficients a₁ and a₂ correspond to the numbers at input of multipliers 10 and 12, respectively, in particular contained in registers R1' and R2', sign inverted.

The poles of the biquadratic filter can be calculated in the known way through the formula p_{1,2} = -a₁/2 ± (a₁²/4-a₂)^{½}, so that if a₁² > 4a₂ two separate real poles are obtained, if a₁² = 4a₂ two coinciding real poles are obtained, and if a₁² < 4a₂ two complex conjugate poles are obtained. Likewise, the zeroess of the biquadratic filter can be calculated in the known way through the formula z_{1,2} = (-b₁ ± (b₁²-4b₀)^{½})/2b₀, therefore if b₁²>4b₀ two separate real zeroes are obtained, if b₁² = 4b₀ two coinciding real zeroes are obtained, and if b₁²< 4b₀ two complex conjugate zeroes are obtained. The stability condition for this type of filter is given by the following relations: |a₁| < 1+a₂ e |a₂| < 1. Finally, if an all-pass type filter is desired, also the following conditions shall be satisfied: a₁ = b₁ e a₂ = b₀.

Making reference to figure 3, we see that the complex filtering cell CF includes two specular series of electronic devices placed along the transmission lines 5 and 5'. In particular, at input on said lines there is a pair of adding cells S3 and S3' transforming the 3.9 bit numbers into 3.10 bit numbers at output, adding a logic one on the right of the less significant bit, as it takes place in cells S1 and S2 of the biquadratic filtering cells F1, F1', F2, F2', F3 and F3'.

The pair of number coming out from cells S3 and S3' is summed by a pair of adders 16, 16' to another pair of numbers transmitted through two retroactive 4.15-bit lines 17, 17'. The outputs of said adders 16, 16' are connected to a pair of cutting cells T3, T3' which truncate the sums eliminating the less significant bits and the possible more significant bits in excess versus the 3.9 bit resolution. The outputs of cells T3, T3' are connected to a second pair of adding cells S4 and S4' transforming the 3.9 bit number at input into a 3.10 bit number at output adding a logic one on the right of the less significant bit, as it happens in cells S3, S3'.

Each one of the cells S4 and S4' is connected in series to a pair of delay cells D4, D5 and D4', D5', respectively, each one delaying the signal at input of Ts/2, where Ts/2 is the sampling period of AD and AD' converters. The outputs of the first delay cells D4, D4' are connected, in addition to the second delay cells D5, D5', also to two multipliers 18, 18' multiplying the number coming out from the delay cell D4 or D4' connected to one of them, by a number drawn for instance from a pair of registers R3 and R3'. In particular, registers R3 and R3' contain a 1.5 bit number each.

Products at output of multipliers 18 and 18' are added by a pair of adders 19, 19' with the numbers coming out from the second pair of delay cells D5, D5'. In particular, the product coming out from multiplier 18 is summed up by adder 19' with the number coming out from the delay cell D5', and vice versa, in order to cross the lines 5 and 5'. 4.15 bit values coming out from adders 19, 19' are taken to the output of the filtering cell CF after having been truncated in a 3.9 bit number by an additional pair of cutting cells T4, T4'. To complete the structure of the filtering cell CF, the outputs of multipliers 18 and 18' are connected to adders 16, 16' through the retroactive lines 17, 17'. Also in this case the lines 5, 5' are crossed, since multiplier 18 is connected to the adder 16' through the retroactive line 17', and vice versa.

The whole of the two pairs of delay cells D4, D4', D5 and D5' connected in series two by two, in which the outputs of the first delay cells D4, D4' of each pair are connected to a pair of multipliers 18, 18' whose outputs are in their turn connected to two pairs of adders 16, 16', 19 and 19' placed upstream and downstream said delay cells D4, D4', D5 and

D5', respectively, duly forms a complex filter CF having a transfer function of the H(z)=(-jd+z⁻¹)/(1+jcz⁻¹) type, where the coefficient c corresponds to the number at input of the multiplier 18', in particular contained in register R3', while the coefficient d corresponds to the number at input of the multiplier 18, in particular contained in register R3, with inverted sign.

The pole of the complex filter CF is equal to -jc, while the zero is equal to -j/d. The stability condition for this type of filter is given by the relation |c| < 1. If an all-pass type filter is requested, also the c = d condition shall be met.

For the implementation of the equalizer according to the present invention a dedicate integrated circuit can be used, preferably including one or more electronic devices suitable to improve the operation and/or accuracy of the equalizer itself, such as for instance a digital detector for the automatic control of the gain and a reception filter FIR. In particular, the integrated circuit implemented by the applicant can be planned through an appropriate interface and in the present embodiment it includes about 70000 logic ports, it can operate at a maximum frequency 80 MHz and absorbs 1,7 W at the rated frequency of 50 MHz.

Though one particular embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

## Claims

1. Group delay digital equalizer (6) having two inputs for receiving a component in phase and a component in quadrature of the signal to be equalized, **characterized in that** it consists of:
• two identical filtering sections (F1, F2, F3; F1', F2', F3') departing from said inputs for filtering the components in phase and in quadrature of the data to be equalized, each section including one or more biquadratic infinite impulse response IIR cells connected in cascade (F1, F2, F3; F1', F2', F3'), each biquadratic IIR cell having a transfer function including two real or complex conjugate poles and two real or complex conjugate zeroes ;
• a third IIR filtering section (CF) having two inputs for receiving the IIR filtered components in phase and in quadrature, and two outputs (5, 5') for outputting two phase quadrature equalized data components,
• at least two pairs of delay cells (D4, D5; D4', D5') connected in series two by two inside the third IIR filtering section (CF) along two paths between inputs and outputs of the section (CF);
• a first multiplier (18) for multiplying a signal received from the midpoint of the series of a first pair of delay cells (D4, D5) by a first coefficient (R3) of the transfer function of the third IIR filtering section (CF) and outputting a first product signal;
• first adding means (19') to add up the first product signal to the output of the second delay cell (D5') of the second pair of delay cells (D4', D5'), and second adding means (16') to add up the first product signal to the input of the first delay cell (D4') of said second pair of delay cells (D4', D5');
• a second multiplier (18') for multiplying a signal received from the midpoint of the series of a second pair of delay cells (D4', D5') by a second coefficient (R3'), sign inverted, of the same transfer function and outputting a second product signal;
• third adding means (19) to add up the second product signal to the output of the second delay cell (D5) of the first pair of delay cells (D4, D5), and fourth adding means (16) to add up the second product signal to the input of the first delay cell (D4) of the first pair of delay cells (D4, D5).

2. Equalizer according to the claim 1, **characterized in that** the third IIR filtering section (CF) has a transfer function with at least an imaginary pole and an imaginary zero.

3. Equalizer according to the claim 2, **characterized in that** the third IIR filtering section (CF) is of the all-pass type.

4. Equalizer according to the claim 1, **characterized in that** at least one biquadratic IIR cell per filtering section (F 1, F2, F3; F1', F2', F3') is of the all-pass type.

5. Equalizer according to claim 1 or 4, **characterized in that** a biquadratic cell (F1, F1', F2, F2', F3, F3') includes:
• at least three delay cells (D1, D2, D3) connected in series along a path between input and output of the cell for delaying the crossing data one sampling period for each delay cell;
• a first multiplier (9) for multiplying a signal received from the midpoint of the series of a first (D1) and a second (D2) delay cell by a first coefficient (R1) of the transfer function of the biquadratic cell and outputting a first product signal;
• a second multiplier (10) for multiplying a signal received from the previous midpoint by a second coefficient (R1'), sign inverted, of the same transfer function and outputting a second product signal;
• a third multiplier (11) for multiplying a signal received from the midpoint of the series of the second (D2) and the third (D3) delay cell by a third coefficient (R2) of the transfer function of the biquadratic cell and outputting a third product signal;
• a fourth multiplier (12) for multiplying a signal received from the previous midpoint by a fourth coefficient (R2'), sign inverted, of the same transfer function and outputting a fourth product signal;
• first adding means (13, 14) to add up the first and third product signal to the output of the third delay cell (D3); and
• second adding means (15, 7) to add up the second and fourth product signal to the input of the first delay cell (D1).

6. Equalizer according to the claim 5, **characterized in that** a first cutting cell (T1) precedes the first delay cell (D1) and a second cutting cell (T2) is placed at the output of the biquadratic filtering cell (F1, F1', F2, F2', F3, F3'); the two cutting cells (T1, T2) truncating the signal at input eliminating the less significant bits and the possible more significant bits in excess versus a predetermined resolution.

7. Equalizer according to the claim 6, **characterized in that** a first adding cell (S1) precedes the input of the biquadratic filtering cell (F1, F1', F2, F2', F3, F3'), and a second adding cell (S2) follows the output of the first cutting cell (T1); the two adding cells (S1, S2) adding to the number at input a logic one on the right of the less significant bit.

8. Equalizer according to any claim from 1 to 3, **characterized in that** a first pair of cutting cells (T3, T3') precedes the two first delay cells (D4, D4') and a second pair of cutting cells (T4, T4') are put at the two outputs of the third IIR filtering section (CF); the cutting cells (T1, T2) truncating the signal at input eliminating the less significant bits and the possible more significant bits in excess versus a predetermined resolution.

9. Equalizer according to the claim 8, **characterized in that** a first pair of adding cell (S3, S3') precedes the two inputs of the filtering section (CF) while a second pair of adding cell (S4, S4') follows the first pair of cutting cells (T3, T3'); the four adding cells (S3, S3', S4, S4') adding to the number at input a logic one on the right of the less significant bit.

10. Equalizer according to one of the previous claims, **characterized in that** each one of the two outputs of the third IIR filtering section (CF) is connected to a cell (SC, SC') saturating the signal received by said filtering section.

## Patentansprüche

1. Digitaler Gruppenlaufzeit-Equalizer (6), der zwei Eingänge zum Empfangen einer Inphasekomponente und einer Quadraturkomponente des zu entzerrenden Signals aufweist, **dadurch gekennzeichnet, dass** er besteht aus:
• zwei identischen Filtersektionen (F1, F2, F3; F1', F2', F3'), die von den besagten Eingängen ausgehen, zum Filtern der Inphasekomponente und der Quadraturkomponente der zu entzerrenden Daten, wobei jede Sektion eine oder mehrere in Kaskade geschaltete biquadratische Zellen mit unendlicher Impulsantwort IIR (Infinite Impulse Response) (F1, F2, F3; F1', F2', F3') aufweist, wobei jede biquadratische IIR-Zelle eine Transferfunktion aufweist, die zwei reelle oder konjugiert komplexe Pole und zwei reelle oder konjugiert komplexe Nullstellen aufweist;
• einer dritten IIR-Filtersektion (CF), die zwei Eingänge zum Empfangen der mit IIR-Filtern gefilterten Inphasekomponente und Quadraturkomponente und zwei Ausgänge (5, 5') zum Ausgeben von zwei entzerrten Inphase- und Quadratur-Datenkomponenten aufweist,
• wenigstens zwei Paaren von Verzögerungszellen (D4, D5; D4', D5'), von denen jeweils zwei innerhalb der dritten IIR-Filtersektion (CF) entlang von zwei Wegen zwischen Eingängen und Ausgängen der Sektion (CF) in Reihe geschaltet sind;
• einem ersten Multiplizierglied (18) zum Multiplizieren eines Signals, das von dem Mittelpunkt der Reihenschaltung eines ersten Paares von Verzögerungszellen (D4, D5) empfangen wurde, mit einem ersten Koeffizienten (R3) der Transferfunktion der dritten IIR-Filtersektion (CF) und Ausgeben eines ersten Produktsignals;
• ersten Addiermitteln (19') zum Addieren des ersten Produktsignals zum Ausgang der zweiten Verzögerungszelle (D5') des zweiten Paares von Verzögerungszellen (D4', D5') und zweiten Addiermitteln (16') zum Addieren des ersten Produktsignals zum Eingang der ersten Verzögerungszelle (D4') des besagten zweiten Paares von Verzögerungszellen (D4', D5');
• einem zweiten Multiplizierglied (18') zum Multiplizieren eines Signals, das von dem Mittelpunkt der Reihenschaltung eines zweiten Paares von Verzögerungszellen (D4', D5') empfangen wurde, mit einem zweiten Koeffizienten (R3'), mit umgekehrtem Vorzeichen, derselben Transferfunktion und Ausgeben eines zweiten Produktsignals;
• dritten Addiermitteln (19) zum Addieren des zweiten Produktsignals zum Ausgang der zweiten Verzögerungszelle (D5) des ersten Paares von Verzögerungszellen (D4, D5) und vierten Addiermitteln (16) zum Addieren des zweiten Produktsignals zum Eingang der ersten Verzögerungszelle (D4) des ersten Paares von Verzögerungszellen (D4, D5).

2. Equalizer nach Anspruch 1, **dadurch gekennzeichnet, dass** die dritte IIR-Filtersektion (CF) eine Transferfunktion mit wenigstens einem imaginären Pol und einer imaginären Nullstelle aufweist.

3. Equalizer nach Anspruch 2, **dadurch gekennzeichnet, dass** die dritte IIR-Filtersektion (CF) vom Typ eines Allpassfilters ist.

4. Equalizer nach Anspruch 1, **dadurch gekennzeichnet, dass** wenigstens eine biquadratische IIR-Zelle pro Filtersektion (F1, F2, F3; F1', F2', F3') vom Typ eines Allpassfilters ist.

5. Equalizer nach Anspruch 1 oder 4, **dadurch gekennzeichnet, dass** eine biquadratische Zelle (F1, F1', F2, F2', F3, F3') aufweist:
• wenigstens drei Verzögerungszellen (D1, D2, D3), die entlang eines Weges zwischen Eingang und Ausgang der Zelle in Reihe geschaltet sind, zum Verzögern der durchlaufenden Daten um eine Abtastperiode für jede Verzögerungszelle ;
• ein erstes Multiplizierglied (9) zum Multiplizieren eines Signals, das von dem Mittelpunkt der Reihenschaltung einer ersten (D1) und einer zweiten (D2) Verzögerungszelle empfangen wurde, mit einem ersten Koeffizienten (R1) der Transferfunktion der biquadratischen Zelle und Ausgeben eines ersten Produktsignals;
• ein zweites Multiplizierglied (10) zum Multiplizieren eines Signals, das von dem zuvor genannten Mittelpunkt empfangen wurde, mit einem zweiten Koeffizienten (R1'), mit umgekehrtem Vorzeichen, derselben Transferfunktion und Ausgeben eines zweiten Produktsignals;
• ein drittes Multiplizierglied (11) zum Multiplizieren eines Signals, das von dem Mittelpunkt der Reihenschaltung der zweiten (D2) und der dritten (D3) Verzögerungszelle empfangen wurde, mit einem dritten Koeffizienten (R2) der Transferfunktion der biquadratischen Zelle und Ausgeben eines dritten Produktsignals;
• ein viertes Multiplizierglied (12) zum Multiplizieren eines Signals, das von dem zuvor genannten Mittelpunkt empfangen wurde, mit einem vierten Koeffizienten (R2'), mit umgekehrtem Vorzeichen, derselben Transferfunktion und Ausgeben eines vierten Produktsignals;
• erste Addiermittel (13, 14) zum Addieren des ersten und dritten Produktsignals zum Ausgang der dritten Verzögerungszelle (D3); und
• zweite Addiermittel (15, 7) zum Addieren des zweiten und vierten Produktsignals zum Eingang der ersten Verzögerungszelle (D1).

6. Equalizer nach Anspruch 5, **dadurch gekennzeichnet, dass** eine erste Beschneidungszelle (T1) der ersten Verzögerungszelle (D1) vorangeht und eine zweite Beschneidungszelle (T2) am Ausgang der biquadratischen Filterzelle (F1, F1', F2, F2', F3, F3') angeordnet ist, wobei die zwei Beschneidungszellen (T1, T2) das Signal am Eingang beschneiden, indem sie die niederwertigen Bits und die eventuellen höherwertigen Bits entfernen, die im Vergleich zu einer vorgegebenen Auflösung überschüssig sind.

7. Equalizer nach Anspruch 6, **dadurch gekennzeichnet, dass** eine erste Addierzelle (S1) dem Eingang der biquadratischen Filterzelle (F1, F1', F2, F2', F3, F3') vorangeht und eine zweite Addierzelle (S2) dem Ausgang der ersten Beschneidungszelle (T1) folgt, wobei die zwei Addierzellen (S1, S2) zu der Zahl am Eingang eine logische Eins rechts von dem niederwertigen Bit hinzufügen.

8. Equalizer nach einem der Ansprüche 1 bis 3, **dadurch gekennzeichnet, dass** ein erstes Paar von Beschneidungszellen (T3, T3') den zwei ersten Verzögerungszellen (D4, D4') vorangeht und ein zweites Paar von Beschneidungszellen (T4, T4') an den zwei Ausgängen der dritten IIR-Filtersektion (CF) angeordnet ist, wobei die Beschneidungszellen (T1, T2) das Signal am Eingang beschneiden, indem sie die niederwertigen Bits und die eventuellen höherwertigen Bits entfernen, die im Vergleich zu einer vorgegebenen Auflösung überschüssig sind.

9. Equalizer nach Anspruch 8, **dadurch gekennzeichnet, dass** ein erstes Paar von Addierzellen (S3, S3') den zwei Eingängen der Filtersektion (CF) vorangeht, während ein zweites Paar von Addierzellen (S4, S4') dem ersten Paar von Beschneidungszellen (T3, T3') folgt, wobei die vier Addierzellen (S3, S3', S4, S4') zu der Zahl am Eingang eine logische Eins rechts von dem niederwertigen Bit hinzufügen.

10. Equalizer nach einem der vorhergehenden Ansprüche, **dadurch gekennzeichnet, dass** jeder der zwei Ausgänge der dritten IIR-Filtersektion (CF) mit einer Zelle (SC, SC') verbunden ist, die das durch die besagte Filtersektion empfangene Signal sättigt.

## Revendications

1. Égaliseur numérique du temps de propagation de groupe (6) ayant deux entrées pour recevoir une composante en phase et une composante en quadrature du signal devant être égalisé, **caractérisé en ce qu'**il consiste en :
• deux sections de filtrage identiques (F1, F2, F3 ; F1', F2', F3') partant desdites entrées pour filtrer les composantes en phase et en quadrature des données devant être égalisées, chaque section incluant une ou plusieurs cellules IIR à réponse impulsionnelle infinie biquadratiques connectées en cascade (F1, F2, F3; F1', F2', F3'), chaque cellule IIR biquadratique ayant une fonction de transfert incluant deux pôles réels ou complexes conjugués et deux zéros réels ou complexes conjugués ;
• une troisième section de filtrage IIR (CF) ayant deux entrées pour recevoir les composantes en phase et en quadrature filtrées IIR, et deux sorties (5, 5') pour délivrer en sortie deux composantes de données égalisées en quadrature,
• au moins deux paires de cellules de retard (D4, D5 ; D4', D5') connectées en série deux par deux à l'intérieur de la troisième section de filtrage IIR (CF) le long de deux voies entre les entrées et les sorties de la section (CF);
• un premier multiplicateur (18) pour multiplier un signal reçu du point milieu de la série d'une première paire de cellules de retard (D4, D5) par un premier coefficient (R3) de la fonction de transfert de la troisième section de filtrage IIR (CF) et délivrer en sortie un premier signal produit ;
• un premier moyen d'addition (19') pour additionner le premier signal produit à la sortie de la deuxième cellule de retard (D5') de la deuxième paire de cellules de retard (D4', D5'), et un deuxième moyen d'addition (16') pour additionner le premier signal produit à l'entrée de la première cellule de retard (D4') de ladite deuxième paire de cellules de retard (D4', D5') ;
• un deuxième multiplicateur (18') pour multiplier un signal reçu du point milieu de la série d'une deuxième paire de cellules de retard (D4', D5') par un deuxième coefficient (R3'), signe inversé, de la même fonction de transfert et délivrer en sortie un deuxième signal produit ;
• un troisième moyen d'addition (19) pour additionner le deuxième signal produit à la sortie de la deuxième cellule de retard (D5) de la première paire de cellules de retard (D4, D5), et un quatrième moyen d'addition (16) pour additionner le deuxième signal produit à l'entrée de la première cellule de retard (D4) de la première paire de cellules de retard (D4, D5).

2. Égaliseur selon la revendication 1, **caractérisé en ce que** la troisième section de filtrage IIR (CF) a une fonction de transfert avec au moins un pôle imaginaire et un zéro imaginaire.

3. Égaliseur selon la revendication 2, **caractérisé en ce que** la troisième section de filtrage IIR (CF) est du type passe-tout.

4. Égaliseur selon la revendication 1, **caractérisé en ce qu'**au moins une cellule IIR biquadratique par section de filtrage (F1, F2, F3; F1', F2', F3') est du type passe-tout.

5. Égaliseur selon la revendication 1 ou 4, **caractérisé en ce qu'**une cellule biquadratique (F1, F1', F2, F2', F3, F3') inclut :
• au moins trois cellules de retard (D1, D2, D3) connectées en série le long d'une voie entre l'entrée et la sortie de la cellule pour retarder les données se croisant d'une période d'échantillonnage pour chaque cellule de retard ;
• un premier multiplicateur (9) pour multiplier un signal reçu du point milieu de la série d'une première (D1) et d'une deuxième (D2) cellule de retard par un premier coefficient (R1) de la fonction de transfert de la cellule biquadratique et délivrer en sortie un premier signal produit ;
• un deuxième multiplicateur (10) pour multiplier un signal reçu du point milieu précédent par un deuxième coefficient (R1'), signe inversé, de la même fonction de transfert et délivrer en sortie un deuxième signal produit ;
• un troisième multiplicateur (11) pour multiplier un signal reçu du point milieu de la série de la deuxième (D2) et de la troisième (D3) cellule de retard par un troisième coefficient (R2) de la fonction de transfert de la cellule biquadratique et délivrer en sortie un troisième signal produit ;
• un quatrième multiplicateur (12) pour multiplier un signal reçu du point milieu précédent par un quatrième coefficient (R2'), signe inversé, de la même fonction de transfert et délivrer en sortie un quatrième signal produit ;
• un premier moyen d'addition (13, 14) pour additionner le premier et le troisième signal produit à la sortie de la troisième cellule de retard (D3) ; et
• un deuxième moyen d'addition (15, 7) pour additionner le deuxième et le quatrième signal produit à l'entrée de la première cellule de retard (D1).

6. Égaliseur selon la revendication 5, **caractérisé en ce qu'**une première cellule de coupe (T1) précède la première cellule de retard (D1) et une deuxième cellule de coupe (T2) est placée à la sortie de la cellule de filtrage biquadratique (F1, F1', F2, F2', F3, F3') ; les deux cellules de coupe (T1, T2) tronquant le signal à l'entrée en éliminant les bits les moins significatifs et les éventuels bits plus significatifs en excès par rapport à une résolution prédéterminée.

7. Égaliseur selon la revendication 6, **caractérisé en ce qu'**une première cellule d'addition (S1) précède l'entrée de la cellule de filtrage biquadratique (F1, F1', F2, F2', F3, F3'), et une deuxième cellule d'addition (S2) suit la sortie de la première cellule de coupe (T1) ; les deux cellules d'addition (S1, S2) additionnant au nombre à l'entrée un un logique sur la droite du bit le moins significatif.

8. Égaliseur selon l'une quelconque des revendications 1 à 3, **caractérisé en ce qu'**une première paire de cellules de coupe (T3, T3') précède les deux premières cellules de retard (D4, D4') et une deuxième paire de cellules de coupe (T4, T4') sont mises aux deux sorties de la troisième section de filtrage IIR (CF) ; les cellules de coupe (T1, T2) tronquant le signal à l'entrée en éliminant les bits les moins significatifs et les éventuels bits plus significatifs en excès par rapport à une résolution prédéterminée.

9. Égaliseur selon la revendication 8, **caractérisé en ce qu'**une première paire des cellules d'addition (S3, S3') précède les deux entrées de la section de filtrage (CF) tandis qu'une deuxième paire de cellules d'addition (S4, S4') suit la première paire de cellules de coupe (T3, T3') ; les quatre cellules d'addition (S3, S3', S4, S4') additionnant au nombre à l'entrée un un logique sur la droite du bit le moins significatif.

10. Égaliseur selon l'une des revendications précédentes, **caractérisé en ce que** chacune des deux sorties de la troisième section de filtrage IIR (CF) est connectée à une cellule (SC, SC') saturant le signal reçu par ladite section de filtrage.
